# EUROPEAN PATENT APPLICATION

(11) **EP 1 241 601 A1**
(43) Date of publication of application: **18.09.2002**
(21) Application number: 01106134.8
(22) Date of filing: 13.03.2001
(51) Int. Cl.: G06F 17/60

(54) **Method for purchasing and payment of audio and/or video data**

(71) Applicant: EJay AG, 70718 Stuttgart (DE)
(72) Inventor: Schmitz, Helmut, 73230 Kirchheim/Teck-Jesingen (DE)
(74) Representative: Grünecker, Kinkeldey, Stockmair & Schwanhäusser Anwaltssozietät

(57) **Abstract**

The invention provides a method for purchasing and payment of audio and/or video data provided on a provider's platform in a computer network, preferably the Internet, comprising the steps of taking a customer's order for audio and/or video data files; providing a download of ordered audio and/or video data files for the customer; and debiting a mobile telephone account of the customer. In a preferred embodiment of the method of the invention the customer's order is given via mobile telephone, and transmitted from a wireless network, which the mobile telephone is connected to, into a computer network, preferably into the Internet.

## Description

### Field of the Invention

The invention relates to purchase and payment of audio and/or video data files.

### Prior Art

It is well known in the art to purchase audio and/or video data via Internet. Audio and/or video data files are generally stored in data bases of a provider, which data bases can be accessed by a consumer via Internet and the provider's computer (server). In the prior art the customer's gives an order in which the desired audio and/or video data files are specified. After the payment is ensured - usually by debiting a credit card account of the customer - the provider gives the customer access to the provider's computer such that the customer can download the requested audio and/or video data files.

Furthermore, it became recently possible to access the Internet not only via computers but also via other devices such as portable telephones, and the like. In view of this, also ordering via a mobile telephone (portable telephone) of the customer will become popular.

However, presently no debiting system is provided which is convenient for a customer ordering via mobile telephone.

Therefore, it is the objective problem underlying the invention to provide a convenient debiting system, particularly for customers using mobile telephones to purchase and pay audio and/or video data files.

### Description of the Invention

This objective problem is solved by a method for purchasing and payment of services, particularly of audio and/or video data files provided on a provider's platform in a computer network, like the Internet, comprising the steps of taking a customer's order for goods and services, preferably an order for audio and/or video data files; providing a download of ordered goods and services, preferably of audio and/or video data files, for the customer; and debiting a mobile telephone account of the customer.

By providing a debiting of the mobile telephone account of a customer, a customer can conveniently purchase and pay any goods and services, particularly audio and/or video files provided on a computer network, like the internet.

In the description of the present invention, the expression "download" comprises a complete download of goods and services, i.e. the download is completed before the data is used for further processing, as well as a streaming download, i.e., processing of the data is started before transmission of the requested data is completed.

Even though the invention is described in the following with respect to purchasing and paying of audio and/or video data files, this is by no means restrictive. The invention can be employed - also in context with the preferred embodiments described below - for other goods and services provided in a computer network.

Preferably, the customer's order can be given via mobile telephone, and transmitted from a wireless network, which the mobile telephone is connected to, into a computer network, preferably into the Internet. In this embodiment, a customer can make advantage of ordering audio and/or video data provided via Internet, if he/she only uses a mobile telephone and has no access to an internet account.

Nevertheless, the above is not to be understood limiting. In particular, the customer's order can also be given via a computer connected to a network, preferably the Internet. In view of this, also customers ordering via and downloading files onto a computer connected to the internet can use this convenient way of payment.

The download as such can be made available for a customer's computer and/or for a customer's mobile telephone and/or for a customer's hifi receiver and/or for a customer's car hifi receiver and/or for a customer's set-top-box and/or for a customer's TV receiver. In this embodiment, a customer can order audio and/or video data files for different sources with a convenient way of paying for the service.

The above described methods can preferably comprise a verification of the customer's identity before providing the download and before debiting the customer's mobile telephone account.

Additionally or alternatively, a secure connection can be provided for ordering and debiting.

Both measures are to avoid tampering.

## Claims

1. Method for purchasing and payment of goods and services, preferably audio and/or video data provided on a provider's platform in a computer network, like the Internet, comprising the steps:
taking a customer's order for goods and services, preferably an order for audio and/or video data files;
providing a download of ordered goods and services, preferably of audio and/or video data files, for the customer; and
debiting a mobile telephone account of the customer.

2. Method according to claim 1, wherein the customer's order is given via mobile telephone, and transmitted from a wireless network, which the mobile telephone is connected to, into a computer network, preferably into the Internet.

3. Method according to claim 1, wherein the customer's order is given via a computer connected to a network, preferably the Internet.

4. Method according to any one of claims 1 to 3, wherein the download is made available for a customer's computer and/or for a customer's mobile telephone and/or for a customer's hifi receiver and/or for a customer's car hifi receiver and/or for a customer's set-top-box and/or for a customer's TV receiver.

5. Method according to any one of claims 1 to 4, wherein the customer's identity is verified before providing the download and before debiting the customer's mobile telephone account.

6. Method in accordance with any one of claims 1 to 5, wherein a secure connection is provided for ordering and debiting.
